# EUROPÄISCHE PATENTSCHRIFT

(11) **EP 0 894 841 B1**
(45) Veröffentlichungstag und Bekanntmachung des Hinweises auf die Patenterteilung: **02.05.2003**
(21) Anmeldenummer: 98113152.7
(22) Anmeldetag: 15.07.1998
(51) Int. Cl.: C09J 7/02, C09J 175/04, C08G 18/69

(54) **Selbstklebeband**
Adhesive tape
Ruban adhésif

(30) Priorität: 31.07.1997 DE 19733014
(43) Veröffentlichungstag der Anmeldung: 03.02.1999
(73) Patentinhaber: Tesa AG, 20253 Hamburg (DE)
(72) Erfinder: Schümann, Uwe, Dr., 25421 Pinneberg (DE); Weiland, Kirstin, 21035 Hamburg (FR); Schacht, Wolfgang, Dr., 31629 Neu Wulmstorf (DE)

(56) Entgegenhaltungen:
- WO-A-95/16754
- FR-A- 2 579 609
- PATENT ABSTRACTS OF JAPAN vol. 011, no. 139 (C-420), 7. Mai 1987 & JP 61 275371 A (FUJIMORI KOGYO KK), 5. Dezember 1986

## Beschreibung

Die Erfindung beschreibt ein beidseitig klebendes Selbstklebeband, das einerseits spaltüberbrückende Dichtungsfunktionen wahrnehmen kann, andererseits Klebfestigkeiten erreicht, wie sie für im Handel befindliche Hochleistungsklebebänder typisch sind. Das Produkt ist sowohl zur Erzielung kälte- als auch wärmefester Verklebungen geeignet.

Um hohe Festigkeiten gegenüber Abschälen und Scherkräften zu erreichen, ist der Einsatz unterschiedlicher Klebebänder bekannt.

In der DE-PS 2105877 wird ein Klebeband aufgezeigt, das aus einem Träger besteht, der auf mindestens einer Seite mit einem mikrozellulären, druckempfindlichen Klebstoff beschichtet ist und dessen Klebstoffschicht einen Keimbildner enthält, wobei die Zellen der Klebstoffschicht geschlossen und vollständig in der Klebstoffschicht verteilt sind. Dieses Klebeband kann sich der unregelmäßigen Oberfläche, auf die es gebracht wird, anpassen und somit zu einer relativ dauerhaften Verklebung führen, zeigt andererseits auch nur eine relativ geringe Erholung, wenn es auf die Hälfte der ursprünglichen Dicke zusammengedrückt worden ist. Die Hohlräume in der Klebmasse bieten allerdings Ansätze für seitliches Eintreten von Lösungsmitteln und Wasser in die Klebefuge, was beispielsweise bei aufgeklebten Leisten im Automobilbau sehr unerwünscht ist. Weiterhin kann der vollständige Durchtritt von Lösungsmitteln oder Wasser durch das gesamte Klebeband nicht ausgeschlossen werden.

In der EP 601 582 A wird ein Klebeband beschrieben, das aus einem geschäumten Elastomerkern besteht, auf den eine druckempfindliche Klebstoffschicht aufgebracht wurde.

Auch hier sind die durch das Prinzip der Hohlräume bedingten Nachteile gegeben, daß der Klebebandkem wie ein Schwamm Feuchtigkeit oder Lösungsmittel aufsaugen kann. Dies kann zu einer Schwächung der Verbundfestigkeit führen. Weiterhin treten durch das Prinzip des geschäumten Elastomerkerns in den Verklebungen Rückstellkräfte auf, die zu einem vorzeitigen Versagen der Verklebungen führen können.

Den genannten Klebebändern ist gemeinsam, daß die aufnehmbaren Scherkräfte, die auf die geklebte Verbindung einwirken, für viele Einsatzfälle nicht ausreichend sind, um eine dauerhafte Verbindung zwischen Untergrund und dem mittels des Klebebandes zu montierenden Gegenstand zu gewährleisten. So ist insbesondere bei tieferen Temperaturen die Verwendung derartiger Klebebänder nur sehr eingeschränkt möglich, weil bei tiefen Temperaturen eine Versprödung des Trägers auftritt, so daß das Klebeband nicht mehr in der Lage ist, die gewünschte Verklebung aufrechtzuerhalten.

Außerdem sind die genannten Klebebänder nicht in der Lage, Spaltbreiten von mehr als 0,5 cm zu überbrücken und abzudichten. Klebebänder, die dazu in der Lage sind, z.B. Butylbänder, erreichen nur sehr geringe Festigkeiten gegenüber Scher- und Kippscherbeanspruchungen, insbesondere bei erhöhten Temperaturen.

Bekannt ist weiterhin ein Laminat aus einem Polyurethan und einer druckempfindlichen Klebeschicht. Ein solches Laminat wird beispielsweise in der WO 86/00536, einer Beschreibung für eine Tablettenverpackung bzw. -darreichungsform, offenbart. Dabei wird eine nicht weiter aufbereitete Polyesterfolie mit einer selbstklebenden Beschichtung versehen, die eine Tablette umschließt und gleichzeitig mit der Tablette auf der Haut des Anwenders verklebt wird.

Aus US 5,127,974 ist eine Folie zum vorübergehenden Schutz der lackierten Oberflächen von Automobilen bekannt, die u.a. auch die Verwendung von Polyurethan zur Herstellung der Trägerfolie vorschlägt. Auf die Trägerfolie ist dann eine druckempfindliche Klebmasse aufgebracht. Dies Laminat aus Folie und Klebmasse wird nach der Entfernung einer die Klebmasse schützenden Schicht auf der lackierten Oberfläche aufgebracht.

Ein beidseitig klebendes Selbstklebeband, basierend auf einem Polyurethanträger gemäß obiger Beschreibung und einer beidseitig auflaminierten druckempfindlichen Klebeschicht, wird in den genannten Schriften nicht beschrieben, hätte aber darüber hinaus den Nachteil elastischer Rückstellkräfte des Trägers, die nicht aufgefangen werden können und daher zu einer Schwächung der Verbundfestigkeit führen würden.

Der Erfindung liegt die Aufgabe zugrunde, ein Selbstklebeband zu schaffen, das die Nachteile des Standes der Technik nicht, oder zumindest nicht in dem Umfang aufweist und das dennoch nicht in seiner Einsatzfähigkeit ähnlich den vorgenannten Produkten eingeschränkt ist.

Zur Lösung dieser Aufgabe schlägt die Erfindung ein druckempfindliches, beidseitig mit Klebemassen beschichtetes Selbstklebeband vor, dessen Träger von einem formulierten, vernetzten, nicht geschäumten Polyurethan gebildet ist.

Rezeptierungsbestandteile des Trägers sind ein vernetztes, nicht geschäumtes Polyurethan, Füllstoffe und gegebenenfalls weitere Hilfsstoffe.
Der Anteil des Polyurethans am Träger beträgt bis zu 50 Gew.-%, vorzugsweise 30 Gew.-% bis 40 Gew.-%, wobei das Polyurethan weichmacherfrei ist. Die Füllstoffe machen 50 Gew.-% bis 70 Gew.-% des Trägers aus.

Die Auswahl der Isocyanat-Komponente des Polyurethans richtet sich nach den gezielt einzustellenden Eigenschaften des Trägers. In Frage kommen z.B. Toluylendiisocyanat, Diphenylmethan-4,4'-diisocyanat, Dicyclohexylmethan-4,4'-diisocyanat, Hexamethylendiisocyanat, Isophorondiisocyanat, Gemische der genannten Isocyanate oder chemisch daraus abgeleitete Isocyanate, z.B. dimerisierte oder trimerisierte Typen.
Die Auswahl der mit dem Isocyanat reagierenden Komponente richtet sich ebenfalls nach den in Abhängigkeit vom gewünschten Anforderungsprofil einzustellenden Eigenschaften des Trägers. Beispielsweise kommen in Frage alle Polyesterdiole, -triole und - polyole, Polyetherdiole, -triole und -polyole, Polyetherdiamine, -triamine, -polyamine, hydroxyl-funktionalisiertes Polybutadien sowie alle einwertigen Alkohole (Mono-ole), einwertigen Amine (Mono-amine), Polyether-mono-ole, Polyether-mono-amine oder aus den vier letztgenannten Gruppen abgeleitete Produkte.

Als vorteilhaft hat sich gezeigt, wenn die hydroxyl-funktionalisierten Polybutadiene, die Polyesterdiole, die Polyestertriole, die Polyesterpolyole, die Polyetherdiole, die Polyethertriole, die Polyetherpolyole, die Polyetherdiamine, die Polyethertriamine oder die Polyetherpolyamine ein Molekulargewicht M_{g} ≥ 1000 g/mol aufweisen.

Neben den oben aufgezählten Isocyanat-Komponenten und den damit reagierenden Komponenten können aber auch andere Edukte zur Bildung des Polyurethans verwendet werden, ohne den Erfindungsgedanken zu verlassen.

Um die Reaktion zwischen der Isocyanat-Komponente und der mit dem Isocyanat reagierenden Komponente zu beschleunigen, können alle dem Fachmann bekannten Katalysatoren, wie z.B. tertiäre Amine oder zinnorganische Verbindungen eingesetzt werden.

Polyurethane wie oben beschrieben sind in der Herstellung Stand der Technik und beispielsweise in "Ullmann's Encyclopedia of Industrial Chemistry, Vol. A21: Polyurethanes" beschrieben.

Die Formulierung von Polyurethan-Massen ist ebenfalls Stand der Technik und wird besonders bei der Herstellung von Dichtmassen angewendet (vgl. "Ullmann's Encyclopedia of Industrial Chemistry, Vol. A 23: Sealing Materials").

In einer besonders bevorzugten Ausführungsform des Selbstklebebands wird zur Bildung des Polyurethans ein NCO/OH-Verhältnis von 1,0 bis 1,3 eingestellt, vorzugsweise 1,0 bis 1,1.

Der bevorzugte Mono-ol-OH-Anteil am Gesamt-OH-Anteil, d.h., der bevorzugte Kettenabbruchsanteil, liegt zwischen 5 % und 40 %, insbesondere zwischen 10 % und 30 %.

Als Füllstoffe können sowohl verstärkende, wie zum Beispiel Ruß, als auch nicht verstärkende, wie zum Beispiel Kreide oder Bariumsulfat, eingesetzt werden. Weitere Beispiele sind Talkum, Glimmer, pyrogene Kieselsäure, Silikate, Zinkoxid, Mikrovollglaskugeln, Mikrohohlglaskugeln und/oder Mikrokunststoffkugeln aller Art. Auch Mischungen der genannten Stoffe können eingesetzt werden.

Zur Erhöhung der Alterungsstabilität des Klebebandes kann dies mit üblichen Alterungsschutzmitteln, die je nach Anwendungsfall aus der Klasse der verfärbenden oder der nicht verfärbenden Alterungsschutzmittel stammen können, und zwar im Bereich zwischen 0 Gew.-% und 5 Gew.-% sowie bekannten Lichtschutzmitteln im Bereich zwischen 0 Gew.-% und 5 Gew.-% oder Ozonschutzmitteln im Bereich zwischen 0 Gew.-% und 5 Gew.-% abgemischt werden.
Zur Erzielung von Blasenfreiheit können darüber hinaus Trockenmittel, wie beispielsweise Calciumoxid oder Molekularsieb-Zeolithe der Rezeptur beigemischt werden, insbesondere im Bereich zwischen 0 Gew.-% und 10 Gew.-%.

Alle genannten Hilfsstoffe können je nach Einsatzzweck des Selbstklebebandes entweder allein oder in beliebiger Kombination miteinander zur Herstellung der Polyurethanmasse eingesetzt werden, um eine optimale Abstimmung auf die Verwendung zu erhalten. Durch den Einsatz dieser Zusatzstoffe ist auch die Schwarzfärbung, wie sie insbesondere von der Kraftfahrzeugindustrie gefordert wird, problemlos möglich.

Die Anfertigung der Trägermischung findet vorzugsweise in einem Planetenmischer oder Dissolver statt. Um Blasenfreiheit zu erreichen, wird im Vakuumbetrieb gearbeitet. Die Viskosität der Mischung wird so eingestellt, daß sie bei Raumtemperatur im Bereich zwischen 10⁻¹ und 10³ Pa*s liegt. Vorzugsweise erfolgt eine lösungsmittelfreie Verarbeitung.

Die Mischung kann anschließend auf handelsüblichen Beschichtungsmaschinen in einer beliebigen Dicke zwischen 0,1 mm bis 50 mm ausgestrichen werden, vorzugsweise zwischen 0,4 mm und 20 mm.

Im Anschluß erfolgt die chemische Vernetzung im Trockenkanal, vorzugsweise bei Temperaturen von Raumtemperatur bis 120 °C, abhängig von der gewählten Polyurethanrezeptur und der Katalysatormenge.

Das Auftragsgewicht der Klebmasse ist ebenfalls je nach Einsatzzweck beliebig innerhalb des Bereiches von 10 g/m² bis 250 g/m², vorzugsweise 40 g/m² bis 150 g/m², wählbar.

Als Klebmassen können allgemein vorbekannte Klebmassen auf Kautschuk- oder Acrylatbasis verwendet werden.

Um die Verankerung der Klebmasse auf dem Träger zu erhöhen, können bekannte Haftvermittler oder zusätzliche Lackschichten eingesetzt werden. Der Lack stammt dabei vorzugsweise aus der Gruppe der Polyamid-, Epoxid-, Phenol-, Harnstoff-Formaldehyd-, Melamin-Formaldehyd- oder Polyurethanharze.
Alternativ dazu kann auch eine Corona-Vorbehandlung vorgenommen werden. Um besonders feste Verankerungen zu erzielen, ist auch eine Kombination der aufgeführten Verfahren möglich.

Die Klebmasse kann direkt, im indirekten Transferverfahren oder durch Coextrusion mit dem Träger aus der Lösung, Dispersion oder Schmelze aufgetragen werden. Eine besonders bevorzugte Auftragsform ist das "inverse" Auftragsverfahren. Bei diesem Verfahren wird die auf Trennpapier oder Trennfolie ausgestrichene, getrocknete und vernetzte Klebmasse vorgelegt und mit der noch nicht gehärteten, pastösen oder flüssigen Polyurethanmasse unter Zuhilfenahme der Zweikomponentenmischtechnik in der gewünschten Schichtdicke beschichtet. Noch vor der Härtung bzw. Vernetzung der Polyurethanmasse wird eine zweite Klebmasse, die sich ebenfalls bereits ausgestrichen, getrocknet und vernetzt auf Trennpapier oder Trennfolie befindet gegen die ausgestrichene Polyurethanmasse kaschiert. Anschließend erfolgt die Härtung bzw. Vernetzung der Polyurethanmasse im Trockenkanaldurchlauf bei einer Temperatur zwischen Raumtemperatur und 120 °C, abhängig von der gewählten Polyurethanrezeptur und der Katalysatormenge.

Ein Selbstklebeband gemäß obiger Beschreibung, im wesentlichen bestehend aus einem Laminat aus einer erfindungsgemäß formulierten Polyurethan-Masse und einer druckempfindlichen Klebschicht sowie gekennzeichnet durch einen dreischichtigen Aufbau Klebschicht/formulierte Polyurethanmasse/Klebschicht, ist im Stand der Technik nicht vorbeschrieben.

Die Formulierung mit Füllstoffen führt zu den oben beschriebenen hervorragenden Produkteigenschaften. Die Füllstoffe nehmen dem Polyurethanträger einen Teil seiner elastischen Rückstellkräfte und tragen damit zur dauerhaften Verbundfestigkeit der Verklebungen bei.

Das Selbstklebeband zeigt hervorragende Eigenschaften, die auch für den Fachmann derartig nicht vorherzusehen waren. Aufgrund der hohen Flexibilität des Trägers paßt sich das Klebeband sehr gut unebenem Untergrund an, wenn es mit einem gewissen Druck auf diesen gepreßt wird. Auf diese Weise entsteht eine sehr dauerhafte Verbindung zwischen Klebeband und Untergrund, die auch bei hohen Scherkräften, die auf das Selbstklebeband einwirken, nicht versagt. Wegen der fehlenden seitlich offenen Hohlräume im Träger wird auch das mögliche Eindringen von Lösungsmitteln oder Wasser in das Klebeband mit all seinen bekannten Nachteilen verhindert. Da das Klebeband gemäß Erfindung in Dicken von 2 cm und mehr hergestellt werden kann, ist es auch als selbstklebendes, spaltüberbrückendes Abdichtband einsetzbar.

Aufgrund des sehr niedrigen Glaspunktes des Klebebandes sind Tieftemperatureinsätze bis - 40 °C möglich, weil die sonst zu beobachtende Versprödung bekannter Klebebänder nicht auftritt, so daß auch bei diesen extremen Temperaturen eine optimale Haftung des Klebebandes gewährleistet ist.

Die gute Wärme- und Alterungsstabilität des Klebebandes, hervorgerufen durch die nicht-geschäumte Trägerkonsistenz, die ein Eindringen von Feuchtigkeit und Luftsauerstoff verhindert, ermöglicht auch den Einsatz bei höheren Temperaturen von 70 °C bis 100 °C.

Kälte- und Wärmebelastbarkeiten werden beispielsweise bei der Verklebung von Zierleisten oder Spiegeln im Automobilbau gefordert, weil die Fahrzeuge teilweise auch in sehr kalten Zonen beziehungsweise sehr warmen Regionen der Erde mit hoher Sonneneinstrahlung gefahren werden.

Die Verwendung der Erfindung erfolgt außer in der Automobilindustrie auch in der Möbel- und Bauindustrie, wo ebenfalls Spiegel, Leisten oder Blenden dauerhaft mit dem Untergrund zu verankern sind.

Wegen der hervorragenden Produkteigenschaften ist der Einsatz der Erfindung aber nicht auf die genannten Beispiele beschränkt. Vielmehr ist die Verwendung des Klebebandes in vielen Industriebereichen als Montagematerial möglich, wenn es gilt, auf einer relativ unebenen Oberfläche eine sichere Verbindung zwischen zwei Teilen unterschiedlichster Materialien zu schaffen.

Im folgenden soll die Erfindung anhand von Ausführungsbeispielen näher erläutert werden, ohne damit die Erfindung unnötig einschränken zu wollen.

### Beispiele

In der Tabelle 1 sind die zur Herstellung des Trägers verwendeten Materialien aufgeführt, und zwar jeweils mit Handelsnamen und Hersteller. Die genannten Chemikalien sind alle frei im Handel erhältlich.
Die Ausgangsstoffe werden jeweils je nach Anwendungszweck des Selbstklebebandes in unterschiedlichen Mischungsverhältnissen eingesetzt.

**Tabelle 1:**

| Zur Herstellung des Trägers eingesetzte Materialien mit Handelsnamen und Hersteller | | |
|---|---|---|
| Handelsname | Chemische Basis | Hersteller / Lieferant |
| Arcol 1010 ® | Polyether-Diol | ARCO |
| Arcol 1042 ® | Polyether-Triol | ARCO |
| Baycoll BT 5035 ® | Polyether-Triol | Bayer |
| Poly bd R45HT ® | Hydroxyl-terminiertes Polybutadien | Elf Atochem |
| Lutensol AO7 ® | ethoxylierter C₁₃C₁₅ -Oxoalkohol | BASF |
| 1-Dodecanol ® | 1-Dodecanol | Aldrich |
| Omyacarb 4 BG ® | Kreide | OMYA |
| Barytmehl N ® | Bariumsulfat | Alberti |
| Talkum Prever ® | Talkum | Luzenac |
| Zinkoxid Harzsiegel GR ® | Zinkoxid | Heubach |
| Dualite M 6001 AE ® | gecoatete Kunststoffkugeln | OMYA |
| Reflexperlen 50µ ® | Vollglaskugeln | Lindner |
| Sphericel 110 P8 ® | Hohlglaskugeln | Potters-Ballotini |
| Weißfeinkalk ® | Calciumoxid | RWK |
| Aerosil R202 ® | hydrophobierte pyrogene Kieselsäure | Degussa |
| Printex 30 ® | Ruß | Degussa |
| Desmodur CD ® | modifiziertes Diphenyl-methan-4,4'-diisocyanat | Bayer |
| Vestanat IPDI ® | Isophorondiisocyanat | Hüls |

Im folgenden werden 11 Rezepturen für die Herstellung von erfindungsgemäßen Trägern jeweils in Form einer Tabelle dargestellt. Die Aufbereitung der verwendeten Materialien erfolgt dabei stets auf dem nachstehend beschriebenen Weg.

### Beispiel 1

| | |
|---|---|
| Baycoll BT 5035 | 40,0 kg |
| Lutensol AO7 | 3,2 kg |
| Omyacarb 4BG | 47,0 kg |
| Weißfeinkalk | 3,0 kg |
| Aerosil R202 | 2,0 kg |
| Desmodur CD | 4,7 kg |
| DBTL | 0,1 kg |

### Beispiel 2

| | |
|---|---|
| Baycoll BT 5035 | 40,0 kg |
| 1-Dodecanol | 1,2 kg |
| Omyacarb 4BG | 49,0 kg |
| Weißfeinkalk | 3,0 kg |
| Aerosil R202 | 2,0 kg |
| Desmodur CD | 4,7 kg |
| DBTL | 0,1 kg |

### Beispiel 3

| | |
|---|---|
| Arcol 1042 | 42,0 kg |
| Lutensol AO7 | 1,5 kg |
| Omyacarb 4BG | 48,8 kg |
| Weißfeinkalk | 3,0 kg |
| Printex 30 | 1,0 kg |
| Vestanat IPDI | 3,4 kg |
| DBTL | 0,3 kg |

### Beispiel 4

| | |
|---|---|
| Arcol 1042 | 42,0 kg |
| Omyacarb 4BG | 51,3 kg |
| Weißfeinkalk | 3,0 kg |
| Printex 30 | 1,0 kg |
| Vestanat IPDI | 2,4 kg |
| DBTL | 0,3 kg |

### Beispiel 5

| | |
|---|---|
| Poly bd R 45 HT | 17,2 kg |
| Arcol 1010 | 17,6 kg |
| Lutensol AO 7 | 3,1 kg |
| Omyacarb 4BG | 49,8 kg |
| Weißfeinkalk | 3,0 kg |
| Printex 30 | 1,0 kg |
| Desmodur CD | 8,2 kg |
| DBTL | 0,1 kg |

### Beispiel 6

| | |
|---|---|
| Poly bd R 45 HT | 17,2 kg |
| Arcol 1010 | 17,6 kg |
| Lutensol AO 7 | 3,1 kg |
| Omyacarb 4BG | 19,8 kg |
| Barytmehl N | 30,0 kg |
| Weißfeinkalk | 3,0 kg |
| Printex 30 | 1,0kg |
| Desmodur CD | 8,2 kg |
| DBTL | 0,1 kg |

### Beispiel 7

| | |
|---|---|
| Poly bd R 45 HT | 17,2 kg |
| Arcol 1010 | 17,6 kg |
| Lutensol AO 7 | 3,1 kg |
| Omyacarb 4BG | 34,8 kg |
| Talkum Prever | 15,0 kg |
| Weißfeinkalk | 3,0 kg |
| Printex 30 | 1,0 kg |
| Desmodur CD | 8,2 kg |
| DBTL | 0,1 kg |

### Beispiel 8

| | |
|---|---|
| Poly bd R 45 HT | 17,2 kg |
| Arcol 1010 | 17,6 kg |
| Lutensol AO 7 | 3,1 kg |
| Omyacarb 4BG | 39,8 kg |
| Zinkoxid Harzs. GR | 10,0 kg |
| Weißfeinkalk | 3,0 kg |
| Printex 30 | 1,0 kg |
| Desmodur CD | 8,2 kg |
| DBTL | 0,1 kg |

### Beispiel 9

| | |
|---|---|
| Poly bd R 45 HT | 17,2 kg |
| Arcol 1010 | 17,6 kg |
| Lutensol AO 7 | 3,1 kg |
| Omyacarb 4BG | 39,8 kg |
| Dualite M6001 AE | 10,0 kg |
| Weißfeinkalk | 3,0 kg |
| Printex 30 | 1,0 kg |
| Desmodur CD | 8,2 kg |
| DBTL | 0,1 kg |

### Beispiel 10

| | |
|---|---|
| Poly bd R 45 HT | 17,2 kg |
| Arcol 1010 | 17,6 kg |
| Lutensol AO 7 | 3,1 kg |
| Omyacarb 4BG | 39,8 kg |
| Reflexperlen 50 µ | 10,0 kg |
| Weißfeinkalk | 3,0 kg |
| Printex 30 | 1,0 kg |
| Desmodur CD | 8,2 kg |
| DBTL | 0,1 kg |

### Beispiel 11

| | |
|---|---|
| Poly bd R 45 HT | 17,2 kg |
| Arcol 1010 | 17,6 kg |
| Lutensol AO 7 | 3,1 kg |
| Omyacarb 4BG | 39,8 kg |
| Sphericel 110 P8 | 10,0 kg |
| Weißfeinkalk | 3,0 kg |
| Printex 30 | 1,0 kg |
| Desmodur CD | 8,2 kg |
| DBTL | 0,1 kg |

Die Komponenten in den genannten Beispielen werden mit Ausnahme des Isocyanats, welches erst unmittelbar vor der Beschichtung mit Hilfe handelsüblicher 2-Komponenten-Mischtechnik zugegeben wird, in einem handelsüblichen Planetenmischer oder Dissolver zwei Stunden miteinander gemischt. Um ein blasenfreies Produkt zu erhalten, wird die Mischung während der letzten 10 min des Mischvorganges durch Anlegen eines Unterdruckes von kleiner 15 Torr entgast. Man erhält jeweils eine bei Raumtemperatur weiterverarbeitbare, strukturviskose Paste im Viskositätsbereich von 1 Pa*s bis 300 Pa*s.

Die Pasten werden nach Zudosierung des Isocyanats auf einer handelsüblichen Beschichtungsanlage auf handelsüblichem, beidseitig silikonisiertem Papier zu einer Bahn von 1 mm Dicke ausgestrichen und im anschließenden Trockenkanaldurchgang bei einer Temperatur von Raumtemperatur bis 120 °C und einer Verweildauer von 10 min bis 30 min zu einem Elastomer vernetzt. Die Träger haben nach der Härtung und einer anschließenden Lagerung von einer Woche bei Raumtemperatur eine Shore-A-Härte von 10 bis 60, eine Glasübergangstemperatur im Bereich von -60 °C bis -30 °C und eine Zugfestigkeit von größer 1 N/mm² bei einer Reißdehnung von kleiner 500 %.

Anschließend wird das Material in zwei Schritten beidseitig mit je 50 g/m² der Polyacrylatmasse Durotac 280-1753 der Fa. National Starch beschichtet. Die Beschichtung mit der Lösungsmittelmasse erfolgt nach einer in-line Coronabehandlung direkt auf den Träger. Es wird bei 100 °C getrocknet und vernetzt. Das so erhaltene doppelseitige Klebeband wird einseitig mit Trennpapier abgedeckt.

In einem besonders bevorzugten Herstellverfahren wird die Polyacrylatmasse zuerst auf Trennpapier oder Trennfolie ausgestrichen und bei 100 °C getrocknet und vernetzt. Die Beschichtung mit der Polyurethanmischung erfolgt direkt auf die ausgestrichene Polyacrylatmasse. Noch vor der Härtung bzw. Vernetzung der Polyurethanmasse wird eine zweite Polyacrylatmasse, die sich ebenfalls bereits ausgestrichen, getrocknet und vernetzt auf Trennpapier oder Trennfolie befindet, gegen die Polyurethanmasse kaschiert. Anschließend erfolgt die Härtung bzw. Vernetzung der Polyurethanmasse im Trockenkanaldurchlauf bei einer Temperatur zwischen Raumtemperatur und 120°C, abhängig von der gewählten Polyurethanrezeptur und der Katalysatormenge.

Das doppelseitige Klebeband zeichnet sich durch hohe Klebkräfte bei gleichzeitiger hoher Scherfestigkeit aus und die damit erzeugten Verklebungen besitzen eine exzellente Kälteschlagfestigkeit. Das Material dichtet gut gegenüber Feuchtigkeit ab.

## Patentansprüche

1. Druckempfindliches, doppelseitiges Selbstklebeband, umfassend einen beidseitig mit druckempfindlichen Klebemassen beschichteten Träger, der sich zusammensetzt
a) zu einem Gewichtsanteil von bis zu 50 Gew.-%, insbesondere von 30 Gew.-% bis 40 Gew.-%, aus einem vernetzten, nicht geschäumten Polyurethan,
i) gebildet aus hydroxyl-funktionalisiertem Polybutadien, Polyesterdiol, Polyestertriol, Polyesterpolyol, Polyetherdiol, Polyethertriol oder Polyetherpolyol, Polyetherdiamin, Polyethertriamin, Polyetherpolyamin sowie einwertigem Alkohol (Mono-ol), einwertigem Amin (Mono-amin), Polyether-mono-ol, Polyether-mono-amin oder aus von den vier letztgenannten Gruppen abgeleiteten Produkten
ii) und aus Diisocyanat oder chemisch abgeleitetem Isocyanat,
iii) wobei das Polyurethan weichmacherfrei ist,
b) zu einem Gewichtsanteil von 50 Gew.-% bis 70 Gew.-% aus Füllstoffen,
c) gegebenenfalls weiteren Hilfsstoffen.

2. Druckempfindliches, doppelseitiges Selbstklebeband nach Anspruch 1, **dadurch gekennzeichnet, daß** zur Bildung des Polyurethans ein NCO/OH-Verhältnis eingestellt wird von 1,0 bis 1,3, insbesondere 1,0 bis 1,1.

3. Druckempfindliches, doppelseitiges Selbstklebeband nach den Ansprüchen 1 oder 2, **dadurch gekennzeichnet, daß** zur Bildung des Polyurethans der vom Mono-ol, Mono-amin, Polyether-mono-ol oder Polyether-mono-amin herrührende OH- bzw. Amin-Anteil am Gesamt-OH-Anteil zwischen 5 % und 40 %, insbesondere zwischen 10 % und 30 %, liegt.

4. Druckempfindliches, doppelseitiges Selbstklebeband nach den Ansprüchen 1 bis 3, **dadurch gekennzeichnet, daß** die hydroxyl-funktionalisierten Polybutadiene, die Polyesterdiole, die Polyestertriole, die Polyesterpolyole, die Polyetherdiole, die Polyethertriole, die Polyetherpolyole, die Polyetherdiamine, die Polyethertriamine oder die Polyetherpolyamine ein Molekulargewicht M_{g} ≥ 1000 g/mol aufweisen.

5. Druckempfindliches, doppelseitiges Selbstklebeband nach den Ansprüchen 1 bis 4, **dadurch gekennzeichnet, daß** als verstärkende oder nicht verstärkende Füllstoffe eingesetzt sind Ruß, Kreide, Bariumsulfat, Talkum, Glimmer, pyrogene Kieselsäure, Silikate, Zinkoxid, Mikrovollglaskugeln, Mikrohohlglaskugeln und/oder Mikrokunststoffkugeln.

6. Druckempfindliches, doppelseitiges Selbstklebeband nach den Ansprüchen 1 bis 5, **dadurch gekennzeichnet, daß** als Hilfsstoffe eingesetzt sind
- verfärbende oder nicht verfärbende Alterungsschutzmittel im Bereich von 0 Gew.-% bis 5 Gew.-%,
- Lichtschutzmittel im Bereich von 0 Gew.-% bis 5 Gew.-%,
- Ozonschutzmittel im Bereich von 0 Gew.-% bis 5 Gew.-% sowie
- Trockenmittel, insbesondere Calziumoxid oder Molekularsieb-Zeolithe, im Bereich von 0 Gew.-% bis 10 Gew.-%.

7. Druckempfindliches, doppelseitiges Selbstklebeband nach den Ansprüchen 1 bis 6, **dadurch gekennzeichnet, daß** der Träger eine Dicke von 0,1 mm bis 50 mm, vorzugsweise 0,4 mm bis 20 mm, aufweist.

8. Druckempfindliches, doppelseitiges Selbstklebeband nach den Ansprüchen 1 bis 7, **dadurch gekennzeichnet, daß** zwischen Träger und Klebebeschichtung eine Lackschicht aus der Gruppe der Polyamid-, Epoxid-, Phenol-, Harnstoff-Formaldehyd-, Melamin-Formaldehyd- oder Polyurethanharze aufgebracht ist.

9. Druckempfindliches, doppelseitiges Selbstklebeband nach den Ansprüchen 1 bis 8, **dadurch gekennzeichnet, daß** die Klebmasse mit einem Flächengewicht von 10 g/m² bis 250 g/m², vorzugsweise 40 g/m² bis 150 g/m², auf den Träger beschichtet wird.

10. Verwendung eines druckempfindlichen, doppelseitigen Klebebandes nach mindestens einem der vorhergehenden Ansprüche zum Abdichten, insbesondere zum Verschließen von Spalten.

11. Verfahren zur Herstellung eines druckempfindlichen, doppelseitigen Klebebandes nach mindestens einem der vorhergehenden Ansprüche, wobei
a) die auf einem Trennpapier oder einer Trennfolie ausgestrichene, getrocknete und vernetzte Klebmasse vorgelegt wird,
b) die mittels üblicher Verfahren hergestellte, noch nicht gehärtete, pastöse oder flüssige Polyurethanmasse mit Hilfe der Zweikomponentenmischtechnik auf der Klebmasse ausgestrichen wird,
c) die zweite auf einem Trennpapier oder einer Trennfolie ausgestrichene, getrocknete und vemetzte Klebmasse gegen die Polyurethanmasse kaschiert wird und
d) die Polyurethanmasse bei einer Temperatur zwischen 20 °C und 120 °C gehärtet oder vernetzt wird.

## Claims

1. Pressure-sensitive double-sided self-adhesive tape comprising a backing which is coated on both sides with pressure-sensitive adhesive compositions and which is composed
a) to a proportion of up to 50% by weight, in particular from 30 to 40% by weight, of a crosslinked, unfoamed polyurethane
i) formed from hydroxyl-functionalized polybutadiene, polyesterdiol, polyester-triol, polyesterpolyol, polyetherdiol, polyethertriol or polyetherpolyol, polyetherdiamine, polyethertriamine, polyetherpolyamine and monohydric alcohol (monool), monofunctional amine (monoamine), polyethermonool, polyethermonoamine or from products derived from the four last-mentioned groups
ii) and from diisocyanate or chemically derived isocyanate,
iii) the polyurethane being free from plasticizer,
b) to a proportion of from 50 to 70% by weight of fillers,
c) and, if desired, further auxiliaries.

2. Pressure-sensitive double-sided self-adhesive tape according to Claim 1, **characterized in that** an NCO/OH ratio of from 1.0 to 1.3, in particular from 1.0 to 1.1, is established in order to form the polyurethane.

3. Pressure-sensitive double-sided self-adhesive tape according to Claim 1 or 2, **characterized in that** in order to form the polyurethane the proportion of OH and/or amine originating from the monool, monoamine, polyethermonool or polyethermonoamine as a proportion of the total OH is between 5 and 40%, in particular between 10 and 30%.

4. Pressure-sensitive double-sided self-adhesive tape according to Claims 1 to 3, **characterized in that** the hydroxyl-functionalized polybutadienes, the poly-esterdiols, the polyestertriols, the polyesterpolyols, the polyetherdiols, the polyethertriols, the polyetherpolyols, the polyetherdiamines, the polyethertriamines or the polyetherpolyamines have a molecular weight M_{w} ≥ 1000 g/mol.

5. Pressure-sensitive double-sided self-adhesive tape according to Claims 1 to 4, **characterized in that** carbon black, chalk, barium sulphate, talc, mica, pyrogenic silica, silicates, zinc oxide, solid glass microbeads, hollow glass microbeads and/or polymer microbeads are employed as reinforcing or non-reinforcing fillers.

6. Pressure-sensitive double-sided self-adhesive tape according to Claims 1 to 5, **characterized in that** auxiliaries employed are
- discolouring or non-discolouring anti-ageing agents in the range from 0 to 5% by weight,
- light stabilizers in the range from 0 to 5% by weight,
- ozone protectants in the range from 0 to 5% by weight,
- siccatives, especially calcium oxide or molecular sieve zeolites, in the range from 0 to 10% by weight.

7. Pressure-sensitive double-sided self-adhesive tape according to Claims 1 to 6, **characterized in that** the backing has a thickness of from 0.1 to 50 mm, preferably from 0.4 to 20 mm.

8. Pressure-sensitive double-sided self-adhesive tape according to Claims 1 to 7, **characterized in that** a layer of coating material from the group of the polyamide, epoxy, phenolic, urea-formaldehyde, melamine-formaldehyde and polyurethane resins is applied between backing and adhesive coating.

9. Pressure-sensitive double-sided self-adhesive tape according to Claims 1 to 8, **characterized in that** the backing carries the adhesive composition with a basis weight of from 10 to 250 g/m², preferably from 40 to 150 g/m².

10. Use of a pressure-sensitive double-sided adhesive tape according to at least one of the preceding claims for sealing, especially for closing gaps.

11. Process for preparing a pressure-sensitive double-sided adhesive tape according to at least one of the preceding claims, where
a) the adhesive composition, which has been applied to a release paper or a release film, dried and crosslinked, is introduced,
b) the as yet unhardened, pastelike or liquid polyurethane composition, which has been prepared by means of customary techniques, is applied to the adhesive composition with the aid of two-component mixing technology,
c) the second adhesive composition, which has been applied to a release paper or a release film, dried and crosslinked, is laminated to the polyurethane composition, and
d) the polyurethane composition is cured or crosslinked at a temperature between 20°C and 120°C.

## Revendications

1. Ruban autoadhésif double face, sensible à la pression, comprenant un support revêtu des deux côtés de matières adhésives sensibles à la pression, qui se compose
a) à raison d'une proportion pondérale, allant jusqu'à 50 % en poids, en particulier de 30 % en poids à 40 % en poids, d'un polyuréthanne réticulé, non expansé,
I) constitué de polybutadiène à fonction hydroxy, polyester-diol, polyester-triol, polyester-polyol, polyéther-diol, polyéthertriol ou polyéther-polyol, polyéther-diamine, polyéther-triamine, polyéther-polyamine ainsi que d'un alcool monohydroxylé (monoalcool), une amine monofonctionnelle (monoamine), un polyéther-monoalcool, une polyéther-monoamine ou de produits dérivés des quatre groupes cités en dernier
II) et d'un diisocyanate ou d'un isocyanate dérivé chimiquement,
III) le polyuréthanne étant dépourvu de plastifiant,
b) à raison d'une proportion pondérale, de 50 % en poids à 70 % en poids, de charges,
c) éventuellement d'autres adjuvants.

2. Ruban autoadhésif double face sensible à la pression, selon la revendication 1, **caractérisé en ce que**, pour la formation du polyuréthanne, on utilise un rapport NCO/OH de 1,0 à 1,3, en particulier de 1,0 à 1,1.

3. Ruban autoadhésif double face sensible à la pression, selon la revendication 1 ou 2, **caractérisé en ce que**, pour la formation du polyuréthanne, la fraction OH- ou amine provenant du monoalcool, de la monoamine, du polyéther-monoalcool ou de la polyéther-monoamine, par rapport à la fraction OH totale, est comprise entre 5 % et 40 %, en particulier entre 10 % et 30 %.

4. Ruban autoadhésif double face sensible à la pression, selon les revendications 1 à 3, **caractérisé en ce que** les polybutadiènes à fonction hydroxy, les polyester-diols, les polyester-triols, les polyesterpolyols, les polyéther-diols, les polyéther-triols, les polyéther-polyols, les polyéther-diamines, les polyéther-triamines ou les polyéther-polyamines présentent une masse moléculaire Mₚ ≥ 1 000 g/mole.

5. Ruban autoadhésif double face sensible à la pression, selon les revendications 1 à 4, **caractérisé en ce qu'**on utilise en tant que charges de renfort ou non de renfort le noir de carbone, la craie, le sulfate de baryum, le talc, le mica, la silice pyrogénée, des silicates, l'oxyde de zinc, des microsphères de verre pleines, des microsphères de verre creuses et/ou des microsphères de matières plastiques.

6. Ruban autoadhésif double face sensiblei à la pression, selon les revendications 1 à 5, **caractérisé en ce qu'**on utilise comme adjuvants
- des agents antivieillissement colorants ou non colorants, dans la plage de 0 % en poids à 5 % en poids,
- des photoprotecteurs, dans la plage de 0% en poids à 5 % en poids,
- des agents de protection contre l'ozone, dans la plage de 0 % en poids à 5 % en poids, ainsi que
- des desséchants, en particulier l'oxyde de calcium ou des tamis moléculaires-zéolithes, dans la plage de 0 % en poids à 10 % en poids.

7. Ruban autoadhésif double face sensible à la pression, selon les revendications 1 à 6, **caractérisé en ce que** le support présente une épaisseur de 0,1 mm à 50 mm, de préférence de 0,4 mm à 20 mm.

8. Ruban autoadhésif double face sensible à la pression, selon les revendications 1 à 7, **caractérisé en ce qu'**une couche de vernis à base d'une résine choisie dans le groupe des résines polyamide, époxyde, phénolique, urée-formaldéhyde, mélamine-formaldéhyde et polyuréthanne, est appliquée entre le support et le revêtement adhésif.

9. Ruban autoadhésif double face sensible à la pression, selon les revendications 1 à 8, **caractérisé en ce que** la matière adhésive est appliquée sur le support à un poids par unité de surface de 10 g/m² à 250 g/m², de préférence de 40 g/m² à 150 g/m².

10. Utilisation d'un ruban adhésif double face sensible à la pression, selon au moins l'une des revendications précédentes, pour l'étanchéification, en particulier pour le colmatage d'interstices.

11. Procédé pour la fabrication d'un ruban adhésif double face sensible à la pression, selon au moins l'une des revendications précédentes, dans lequel
a) on dispose au préalable la matière adhésive appliquée sur un papier de séparation ou une pellicule de séparation, séchée et réticulée,
b) la matière polyuréthanne préparée à l'aide de procédés usuels, non encore durcie, pâteuse ou liquide, est appliquée sur la matière adhésive, à l'aide de la technique de mélange de deux composants,
c) la seconde matière adhésive appliquée sur un papier de séparation ou une pellicule de séparation, séchée et réticulée, est contrecollée sur la matière polyuréthanne, et
d) la matière polyuréthanne est durcie ou réticulée à une température comprise entre 20°C et 120°C.
